(19) Europäisches Patentamt
European Patent Office
Office européen des brevets

(11) EP 4 717 384 A1

(12) EUROPEAN PATENT APPLICATION

(43) Date of publication:
01.04.2026 Bulletin 2026/14

(21) Application number: 24202942.9

(22) Date of filing: 26.09.2024

(51) International Patent Classification (IPC):
B23C 3/13 (2006.01)   B23C 5/06 (2006.01)
B23C 5/10 (2006.01)

(52) Cooperative Patent Classification (CPC):
B23C 3/13; B23C 5/06; B23C 5/10; B23C 2220/04;
B23C 2220/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: AIRBUS Operations GmbH
21129 Hamburg (DE)

(72) Inventors:
• Gensewich, Christian
21129 Hamburg (DE)
• Lemke, Thomas
21129 Hamburg (DE)

(54) METHOD, CONTROL PROGRAM, COMPUTER-READABLE DATA-CARRIER, CONTROL UNIT AND MILLING DEVICE FOR MILLING A COVER LAYER OF METAL SHEETS

(57) Face milling a cover layer (14) of metal sheets (10) with a milling tool (21) configured to rotate around a rotational axis (R), having at least one milling face (31, 32) extending essentially perpendicularly to the rotational axis (R). A fixture assembly (23) fixes the metal sheet (10) and defines a working plane (E) with which at least flat sections (A) of the metal sheet (10) are supposed to be aligned, such that a surface normal (N) of the flat section (A) extends essentially perpendicularly to the working plane (E); wherein the rotational axis (R) is being tilted under at least one work angle (γ) with respect to the surface normal (N) of the flat section (A) during the milling process.

Fig. 6

## Description

Technical Field

The present disclosure relates to the field of milling, i.e., machining, metal sheets in preparation of further manufacturing steps, such as connecting metal sheets to each other by friction stir welding (FSW), as commonly used for aircraft structures. In particular, the disclosure relates to a method for milling a cover layer of metal sheets, in particular for removing a cladding layer from cladded sheets, to a control program, to a computer-readable data-carrier, to a control unit for a milling device, and to a milling device for milling a cover layer of metal sheets, in particular for removing a cladding layer from cladded sheets.

Technical Background

Methods for preparing metal sheets, in particular by milling the surfaces and/or edges are known from the prior art. Commonly, irrespective milling tool is used to mill the surfaces and/or edges in a manner controlled by respective controlling unit, for example by applying Computerised Numerical Control (CNC). In particular for FSW, such control has to be very precise in order to assure that required tolerances are being kept when preparing edges of two work pieces to be joined by the welding process.

US 11 219 969 B2, for example, relates to a method for edge-to-edge welding of a first sheet metal panel to a second sheet metal panel on a bearing structure. The method comprises positioning and fixing the first panel to the bearing structure, positioning and fixing the second panel to the bearing structure with the second panel overlapping a raw edge of the first panel, jointly cutting the first panel and the second panel in the overlap area to form a connection edge of the first panel and a connection edge of the second panel, withdrawing scrap cuttings from the first panel and scrap cuttings from the second panel, and friction stir welding the connection edges.

EP 1 912 759 B1 relates to a method for joining at least two pieces of sheet material, particularly at least two metal sheets having a thin material thickness for aircraft, comprising the following steps: assembling the sheet material edge to edge while forming a joining area; mechanically machining the sheet material and/or the joining area; subjecting the sheet material and/or joining area to a mechanical and/or chemical adhering pretreatment, and; adhering at least one reinforcing element in the area of an upper side and/or a lower side of the joining area, the at least one reinforcing element having a larger width than a width of the joining area in order to produce a second load path. By adhering at least one reinforcing element in the vicinity of the joining area between the pieces of sheet material, the costly creation of thickenings in the seam area, which are normally required for reducing the seam load in conventional joining between metal sheets, are eliminated. The invention also relates to a joining produced according to the aforementioned method and, lastly, relates to a lightweight structure that has at least one inventive joining.

EP 1 439 121 B1 deals with lightweight structure consisting of at least one skin metal sheet and stiffening elements, which are arranged longitudinally and/or vertically on the metal sheet and which are connected to the metal sheet using the feet of the stiffening elements. The link of the stiffening element consists of two legs on the side that is turned to the metal sheet. Both legs are connected to the metal sheet using two separate joining areas. A method for manufacturing lightweight structure components is also provided.

Typical for edge preparation, as known from the prior art, makes use of a three-sided milling tool to mill upper and lower side of the edge to remove the clad layer and milling of the side, to get the correct shape for FSW. In a next step, usually a mechanical roller is used for guiding a height or vertical position of the milling tool, such that the clad removal is close to a real or actual shape of the metal sheet. This can only be used at flat or nearly ideal cylindrical parts. For non-ideal parts or sheets for a fuselage, which edge changes the curvature, it is not possible to remove the clad within required tolerances.

Summary

It may thus be seen as an object to improve edge and/or surface preparation of metal sheet parts, for example for FSW. In particular, can be seen as an object to improve precision and/or efficiency of milling metal sheet parts to keep tight manufacturing tolerances, such as manufacturing tolerances required for FSW. These objects are at least partly achieved by the subject-matter of the independent claims.

According to an aspect, a method for milling a cover layer of metal sheets, in particular for removing a cladding layer from cladded sheets, is provided, comprising the steps of providing a milling tool configured to rotate around a rotational axis, having at least one milling face extending essentially perpendicularly to the rotational axis and adapted to face the metal sheet in order to mill the cover layer; and providing a fixture assembly configured for fixing the metal sheet and defining a working plane with which at least flat sections of the metal sheet are supposed to be aligned, such that a surface normal of the flat section extends essentially perpendicularly to the working plane; wherein the rotational axis is being tilted under at least one work angle with respect to the surface normal of the flat section during the milling process

According to an aspect, a control program is provided, comprising instructions which, when the control program is executed by a control unit for a milling device, cause the control unit to carry out a corresponding method.

According to an aspect, a computer-readable data-carrier is provided, having stored thereon corresponding control program.

According to an aspect, a control unit for a milling device is provided, configured to carry out corresponding control program and/or comprising a corresponding computer-readable data-carrier.

According to an aspect, a milling device for milling a cover layer of metal sheets is provided, in particular for removing a cladding layer from cladded sheets, comprising a milling tool configured to carry out a corresponding method and/or a corresponding control unit.

The solution allows to achieve particularly high accuracy of clad removal on edges metal sheet to be prepared for FSW. A respective fixture assembly can be part of a work bench of a milling device. The work bench can have a predefined orientation with respect to the milling tool. The proposed solution has the advantage over the prior art that it allows to provide milling surfaces with manufacturing tolerances exceeding actual design parameters, for example, in that services can be built with manufacturing tolerances of ±0,05 mm, instead of ±0,1 mm or worse according to the prior art).

Further developments can be derived from the dependent claims and from the following description. Features described with reference to devices and arrangements may be implemented as method steps, or vice versa. Therefore, the description provided in the context of the method and its steps applies in an analogous manner also to respective devices, tools as well as their elements and/or parts. In particular, the functions of the milling device and its components may be implemented as method steps of the method and the method steps may be implemented as functions and/or elements of the milling device and its components.

According to an embodiment of a method, the at least one work angle comprises a lateral angle which is being adapted to compensate longitudinal irregularities of the metal sheet. Longitudinal irregularities can occur as random irregularities along the respective edge, in particular, a longitudinal edge of the metal sheet part. For example, a certain waviness may occur as a longitudinal irregularity. Tilting the milling tool under the lateral angle, thus rolling it around the edge, to adapt the work angle to such irregularities helps to further improve accuracy of the method.

According to an embodiment of a method, an opposite milling face of the milling tool is being provided and arranged opposite and essentially in parallel to the at least one milling face to provide a free space between the at least one milling face and the opposite milling face for receiving the metal sheet. Two opposing surfaces of the metal sheet can be milled simultaneously. This helps in improving efficiency of the milling process.

According to an embodiment of a method, a clear width of the free space measured essentially in parallel to the rotational axis is selected to accommodate a minimal radius of a curved section of the metal sheet within the free space. The clear width can be fixed at least for milling at least one metal sheet part. In other words, the clear width can be adapted so that the curved section can be received in the free space. This helps in further improving accuracy in milling curved sections.

According to an embodiment of a method, the at least one work angle comprises a longitudinal angle which is being adapted to the clear width. In other words, the rotational axis can be tilted by the longitudinal angle when milling essentially straight sections of the metal sheet. The rotational axis can be tilted under two work angles comprising the lateral angle and the longitudinal angle. The working angle can amount to 0 to 5° or more. In plane sections of the metal sheet, the at least one working angle can amount from 0.1 to 5°, preferably 1 to 4°, most preferably 2 to 3°, depending on the clear width. This helps in further improving accuracy of the milling process.

According to an embodiment of a method, the rotational axis is being aligned to a surface normal the curved section. The alignment can be carried out in a transition section between the flat section and the curved section. Thereby, the work angle, in particular the longitudinal angle, may be gradually adapted from a tilted position of the milling tool to an essentially parallel alignment of the rotational axis with respect to the surface normal and the curvature, in particular a minimal radius of the curved section. Thereby, shape changes of the metal sheet part to be milled can be precisely considered and hence, accuracy of the milling process further improved.

According to an embodiment of a method, the at least one milling face and/or opposite milling face describe a secant line with respect to an inner circumference of the curved section. At least two contact points or sites of contact may be established where the milling face and/or the opposite milling face abut the surface of the metal sheet part along the inner circumference of the curved section. This helps in milling the surface of the metal sheet part in the curved section in a highly precise and controllable manner.

According to an embodiment of a method, the at least one milling face and/or opposite milling face describe a tangent line with respect to an outer circumference of the curved section. Preferably one contact or site of contact may be established where the milling face and/or the opposite milling face abut the surface of the metal sheet part along the outer circumference of curved section. This further helps in milling the surface of the metal sheet part in the curved section in a highly precise and controllable manner.

According to an embodiment of a method, a diameter of the at least one milling face is smaller than a diameter of the opposite milling face. The milling face which is supposed to be arranged at an inner circumference of a curved section can be smaller than the opposite milling face which is supposed to be arranged at an outer circumference of the curved section. The upper section arranged along the outer circumference can thus be bigger than the respective opposite milling face to allow a welding tool to engage the milled surface. Alternatively, or additionally, for example, for particular applications of FSW, the welding tool can be provided as a bobbin tool which may require equally sized milling faces. Adapting the sizes of the milling faces to the diameters of the circumference at hand further helps in enhancing accuracy and precision of the milling process.

According to an embodiment of a method, the method further comprises the step of providing a lateral milling face of the milling tool for simultaneously milling a lateral surface of the metal sheet. An upper side, a lower side and/or a lateral side, i.e., edge, of the metal sheet can be milled simultaneously by means of the at least one milling face, the opposite milling face and/or the lateral milling face, respectively. For example, a roller guided, three side milling tool can be provided, which can be mounted on a milling device. This helps in further improving efficiency and accuracy of the milling process.

According to an embodiment of a method, the method further comprises the steps of obtaining a design shape of a sheet part to be milled; measuring a real shape of the sheet part in advance of the milling process; determining a deviation of the real shape from the design shape; and controlling the milling tool according to the deviation during the milling process. A contour of an edge of the metal sheet can be measured for the adjustment, in particular for determining the at least one work angle for a number of increments of a work path of the milling tool. mounted on a milling machine. In other words, Before starting the milling process, an edge to be milled can be measured, for example, by means of a a ultrasonic distance system, a laser scanner or a tactile measuring system to get the contour of the edge, especially a curvature and the angle of the edge. With this data a respective calculation can be done, to obtain a difference to the ideal (CAD-model based) curvature and ideal angle of the edge. The NC-program of the milling machine is changed with this data, so that the milling tool will be guided the real shape of the edge and hence, accuracy can be further improved to be preferably higher than when using a solely NC-program based on CAD-model. If the forming processes of the metal sheet have been very accurate, then the program can be calculated directly from the CAD-Model that the milling tool, especially at edges which change from straight to curved, is off the orthogonal axis at the straight part and gets orthogonal in the area of the curved Such a method can be applied to a lateral side and/or a transverse side of each metal sheet part to be milled and helps improving accuracy and precision of the milling process.

Brief Description of the Drawings

The subject matter will hereinafter be described in conjunction with the following drawing figures, wherein like numerals denote like elements, and wherein:

Fig. 1 is a schematic side view of an apparatus, for example a vehicle, in the form of an aircraft.

Fig. 2 is a schematic-sectional view of a fuselage of the aircraft shown in Fig. 1 along the cross-sectional line A-A depicted therein.

Fig. 3 is a schematic perspective view of a metal sheet part, such as part for a section of the fuselage, before forming.

Fig. 4 is a schematic perspective view of a metal sheet part, such as part for a section of the fuselage, after forming.

Fig. 5 is a schematic front view of milling device with a milling tool milling a metal sheet part under optimal conditions.

Fig. 6 is a schematic front view of milling device with a milling tool milling a metal sheet part under sub-optimal conditions.

Fig. 7 is a schematic side view of a milling process under a work angle between a rotational axis of a milling tool and a surface normal of a straight section of metal sheet part.

Fig. 8 is a schematic top view of a milling process under a work angle between a rotational axis of a milling tool and a surface normal of a metal sheet part.

Fig. 9 is a schematic side view of a milling process of a curved section of metal sheet part.

Fig. 10 is a schematic illustration of a milling device equipped with a control system for controlling the milling tool.

Fig. 11 is a schematic illustration of steps of a corresponding method.

Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

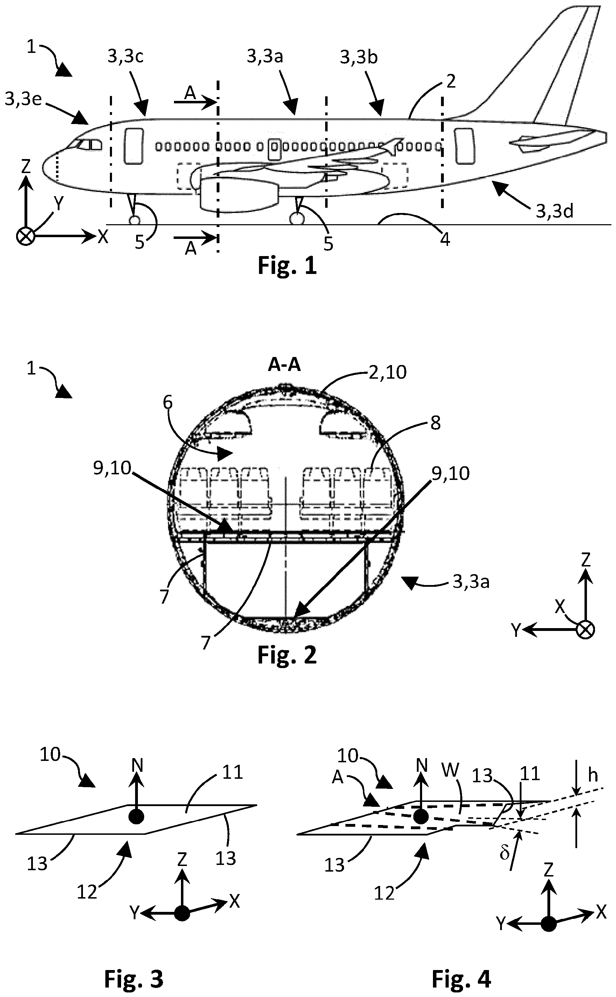

Fig. 1 shows a schematic side view of a an apparatus 1, for example, a vehicle, in the form of an aircraft comprising a support structure 2 in the form of a fuselage having several support structure sections 3, joined together. For example, the support structure sections 3 comprise a first section 3a, a second section 3b, a third section 3c, a fourth section 3d, and/or a fifth section 3e. The first section 3a may be a centre section of the support structure 2. The second section 3b may be an after section of the support structure 2. The third section 3c may be a front section of the support structure 2. The fourth section 3d may be a tail section of the support structure 2. The fifth section 3e may be a nose section of the support structure 2.

The support structure 2 may rest on a ground 4 by means of a landing gear 5 and may surround an interior space 6 accommodating a mounting structure 7 mounted to the support structure 2 (see Fig. 2). The mounting structure may hold loads 8, such as seats for passengers, and may be at least partly covered by means of interior structures 9, such as floor panels. The apparatus 1 and thus, above mentioned components thereof, extend in a longitudinal direction X, a transverse direction Y, and a height direction Z, together forming a Cartesian coordinate system.

Fig. 2 shows a schematic-sectional view of the support structure 2 of the vehicle 1 shown in Fig. 1 along the cross-sectional line A-A depicted therein. Here it becomes apparent that the mounting structure 7 is mounted to the support structure 2. The interior structure 9 rests on the mounting structure 7. The support structure 2 and/or interior structures 9 can be made of and/or comprise metal sheet parts 10.

Fig. 3 is a schematic perspective view of a metal sheet part 10, such as part for a section of the support structure 2, e.g. fuselage, before forming. The metal sheet part 10 can have an upper side 11, a lower side 12 and side faces 13. The upper side 11 and/or lower side 12 can have a surface normal N essentially extending in parallel to and pointing into or against, respectively, the height direction Z. The lateral side faces 13 can constitute edges defining an outer perimeter of the metal sheet part 10.

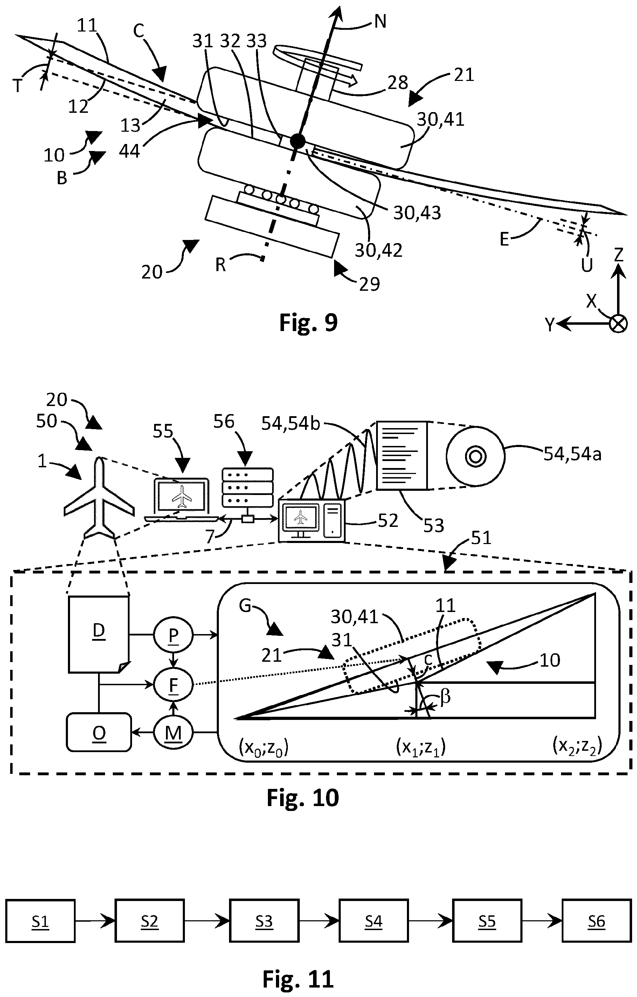

Fig. 4 shows a schematic perspective view of a metal sheet part 10, such as part for a section of the support structure 2, e.g. fuselage, after forming. The forming process may lead to a certain waviness W of the metal sheet part 10. Due to the waviness W, height deviations h and respective angle deviations may occur in straight sections A and/or sections B (see Fig. 9) of the metal sheet part 10

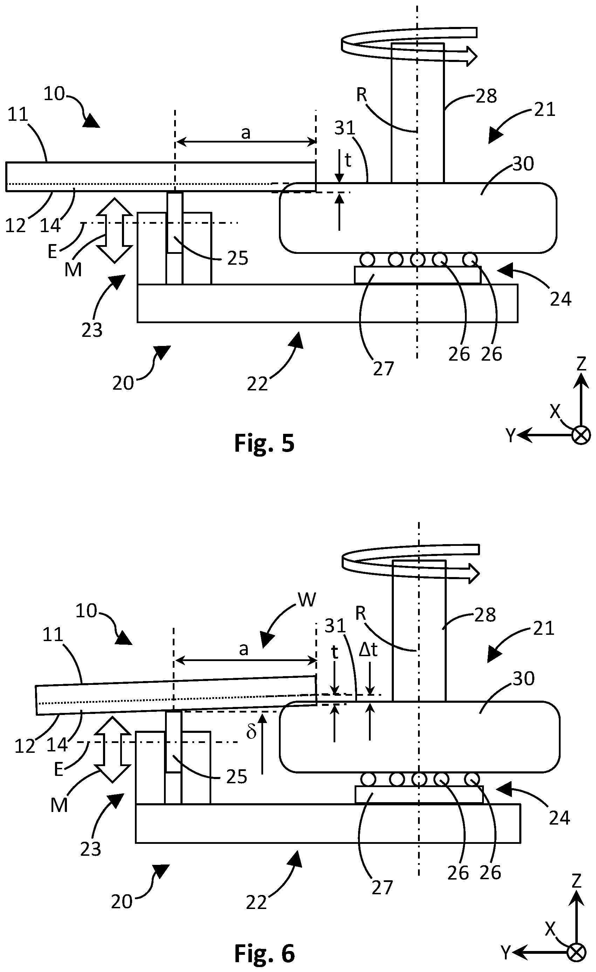

Fig. 5 shows a schematic front view of a milling device 20 with a milling tool 21 milling a metal sheet part 10 under optimal conditions. The metal sheet part 10 may comprise a cover layer 14 which is supposed to be removed before further processing certain portions of the metal sheet part 10, for example, for FSW. The milling device 20 further comprises a workbench 22 with a fixture assembly 23 and a tool support 24.

The fixture assembly 22 is configured to fix the metal sheet part 10 and to provide a working plane E. The metal sheet part 10 can be arranged with respect to the working plane E in a predefined manner according to respective design parameters P from a design dataset D (see Fig. 10). A measuring tool 25 can be provided, for example, as connected to, supported by, and/or integrated into the workbench 22 and/or fixture assembly 23. The measuring tool 25, for example in the form of an ultrasonic distance measuring device, laser scanner, and/or tactile measuring system can provide measurement values M relating to a real shape O of the metal sheet part 10 (see Fig. 10), for example, measured with respect to the working plane E.

The tool support 24 can comprise support rollers 26 and a roller base 27. The support rollers 26 can support and/or guide the milling tool 21 in a predefined position R along a predefined path with respect to the metal sheet part. The roller base 27 can hold and/or support the rollers 26. A shaft 28 can be provided for holding the milling tool 21 and turning it around a rotational axis R. The milling tool 21 comprises at least one cutter 30 providing at least one milling face 31 configured to mill the metal sheet part 10.

Under optimal conditions as illustrated in Fig. 5, a portion of the cover layer 14 to be removed is it engaged by the cutter 30, such that during the milling process, the at least one milling face 31 can cut into the metal sheet part 10 with a milling depth t which, in the present example, can be measured essentially in parallel to the height direction Z and correspond to a thickness or depth of the cover layer 14 measured essentially in parallel to the height direction Z as well. Corresponding measurements can be carried out by means of the measuring tool 25 which can be arranged at the measuring distance a from the section of the metal sheet part 10 currently milled.

Fig. 6 shows a schematic front view of milling device with a milling tool milling a metal sheet part under sub-optimal conditions. Here, deviation angle $\delta$ occurs between the metal sheet part 10 to be milled and the working plane E defined by the fixture assembly 23, for example, due to a certain waviness W of the metal sheet part 10. Due to the deviation angle $\delta$ and the distance measuring distance, a depth deviation $\Delta t$ from the milling depth t is induced in the section to be milled.

As a consequence, in the present example, the depth deviation Δt can be subtracted from the milling depth t required to remove the cover layer 14. Thus, the cutter 30 of the milling tool 21, in particular the at least one milling face 31 thereof, does not engage the metal sheet part 10 by the milling depth t required to remove the cover layer 14. As a result, the milling tool 21 will not entirely remove the cover layer 24 a as required. Alternatively, or additionally, in other sections, where an opposite deviation angle δ may be at hand which may lead to that the depth deviation Δt is being added to the milling depth t, leading to that the milling tool 21 engages the metal sheet part too deep and thus removes more material than required, for example, in cutting deeper than the thickness of the cover layer 14.

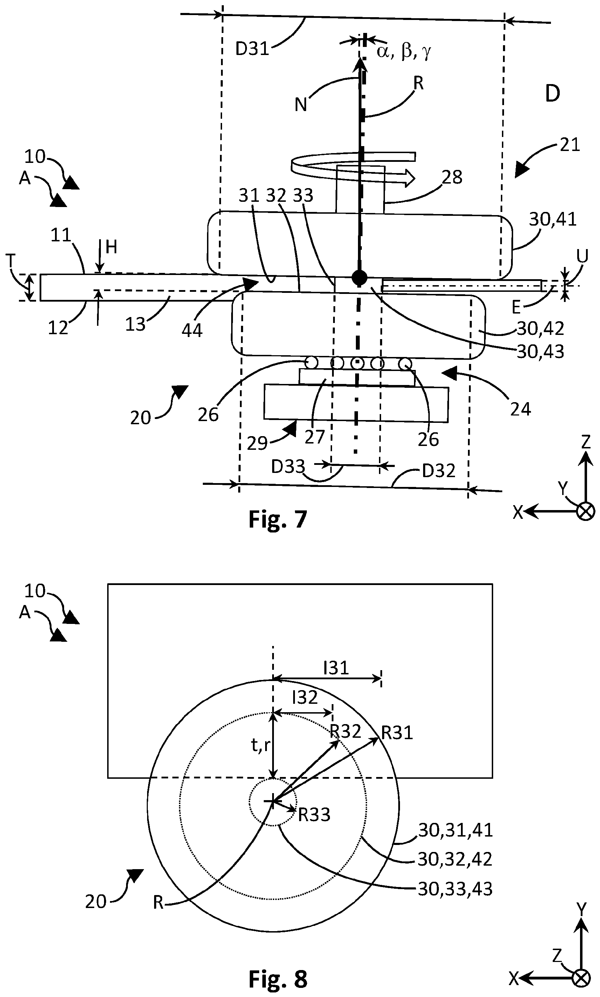

Fig. 7 shows a schematic side view of a milling process under a work angle y between a rotational axis of a milling tool and a surface normal N of a straight section A of metal sheet part 10 having an initial material thickness T before the milling process and/or processed material thickness U after the milling process measured essentially in parallel to the height direction Z and the orientation of the metal sheet part 10 illustrated in Fig. 7. In the present example, the milling tool 21 comprises a tool holder 29 which may hold the roller base 27, the shaft 28 and/or at least three cutters 30 providing the at least one milling face 31, an opposite milling face 32, and/or lateral milling face 33, respectively. The tool holder 29 may be adapted to be moved with respect to the working plane E as desired and required for certain milling process. The cutters 30 can comprise a first cutter or upper cutter 41 providing the at least one milling face 31, a second cutter or lower cutter 42 providing the opposite milling face 32 and/or a third cutter lateral cutter 43, providing the lateral milling face 33, respectively.

The work angle y can comprise a lateral angle α and a longitudinal angle β. The lateral angle α can be set and/or adjusted by rolling the around the lateral side 13 of the metal sheet part 10 in the present example and can be particularly applied to compensate for longitudinal irregularities, such as the waviness W, occurring when moving the milling tool 21 along the working plane E, for example, along the longitudinal axis X. The longitudinal angle β can be adjusted by tilting the milling tool 21 with respect to the working plane E in the present example and can be particularly applied for adapting the orientation of the milling tool 21 to the clear width H of a free space 44 provided between the first cutter 41 and the second cutter 42, in particular between the at least one milling face 31 and the opposite milling face 32, provided thereby, measured essentially in parallel to the rotational axis R.

Furthermore, at least one milling diameter D31 provided by the at least one milling face 31 can be bigger than an opposite milling diameter D32 provided by the opposite milling face 32. Both, the at least one milling diameter D31 and the opposite milling diameter D32 can be bigger than a lateral milling diameter D33 of the lateral milling face 33. A shape and orientation of the metal sheet part 10, the work angle y, the clear width H, and/or the milling diameters D31, D32, D33 determine the milling depth t.

Fig. 8 shows a schematic top view of a milling process under a work angle y between the rotational axis R of a milling tool and the surface normal N of the metal sheet part 10. Here it becomes apparent, that due to their different milling diameters D31, D32, D33, the at least one milling face 31, opposite milling face 32, and/or lateral milling face 33 provide at least one milling radius R31, at least one opposite milling radius R32, and/or at least one lateral milling radius R33, respectively. The different milling radiuses R31, R32, R33, in particular the at least one milling radius R31 and the at least one opposite milling radius R32 determine the milling depth t, in particular respective lateral milling depth r as well as starting points I, in particular, at least one starting point I31 and at least one opposite starting point I32, of the milling process conducted with the at least one milling face 31 and the opposite milling face 32, respectively, depending on the respective work angle y, which can be determined or at least approximated by the following two equations:

$$I31 = \sqrt{R31^2 - (R32 - t)^2}$$

$$I32 = \sqrt{R32^2 - (r - t)^2}$$

The respective work angle y may be determined or at least approximated by the following equation:

$$\gamma = \frac{180°}{\pi \cdot H} \cdot \left( \sqrt{2 \cdot H + (I31 + I32)^2 - 2 \cdot U \cdot W} - (I31 + I32) \right)$$

Fig. 9 shows a schematic side view of a milling process of a curved section B of the metal sheet part 10. Curved section B can have a curvature C. Other than the waviness W, the curvature C should have a defined radius and underlying design parameters P defined in the respective design dataset D (see Fig. 10). In the present example, the rotational axis R and the surface normal N in the region of the rotational axis R extent essentially in parallel to each other at least in a projection along a transverse direction Y, such that both, the at least one milling face 31 and that and the opposite milling face 32 both contribute to the milling process. Preferably, the at least one milling face 31 abuts the upper side at two contact points or regions along the respective secant line and/or the opposite milling face 33 abuts the lower side 13 at a single contact point or region and thus constitutes a tangent line with respect to the surface of the metal sheet part 10 during the milling process.

Fig. 10 shows a schematic illustration of a milling device 20 equipped with a control system 50 for controlling the milling tool. The computer system 50 can provide a control application 51 and comprises a control unit 52 for implementing a corresponding method by means of a respective control program 3 and/or computer-readable data carrier 54. The control unit 2 is configured to execute a control program 53. A computer-readable data carrier 54 has stored thereon the control program 53 and may take the form of a computer-readable medium 54a and/or data carrier signal 54b. Furthermore, the computer system 50 may comprise a computer workstation 55, and/or a server device 56 connected to each other via transmission lines 57 for transmitting information, such as computational data, or alike, between each other as well as to the measuring tool (see Fig. 5). The control unit 52 may be configured as, comprise, and/or be connected to the milling tool 21, measuring tool 25, computer workstation 55 and/or the server device 56 via respective transmission lines 7.

The control application 51 allows for obtaining design datasets D, design parameters P, and/or experientially assessed parameters in the form of real shapes O and/or respective measurement values M, respectively. In operation, the design application 10 will compare the real shapes O and/or respective measurement values M to the respective design datasets D, and/or design parameters P, in order to derive respective deviations F between the design datasets D, design parameters P, real shapes O and/or measurement values M, and will adjust the work angle y accordingly based on or at least with the help of and/or considering the deviations F. For example, the design application 10 will use respective longitudinal, transfers, and/or height coordinates x, y, z measured essentially the longitudinal direction X, transverse direction Y, and/or height direction Z, respectively, to control the movement of the milling tool 21 with respect to the metal sheet part 10. Any of the components of the apparatus 1 and the milling device 20 shown herein, including but not limited to the metal sheet part 10 and the milling tool 21, as well as any of the parameters and values relating thereto can be represented by means of respective image datasets G which can be used by the control unit 52, the computer workstation 55, and/or the, the server device 56 to display them in a respective display device to facilitate operation of the milling device 20.

For example, in operation, based on respective coordinates x, y, z, a curvature distance c between the at least one milling face 31 and the upper side 11 of the metal sheet part 10 can be determined or at least approximated based on a respective work angle y, in particular longitudinal angle $\beta$, by means of the following exemplary equations:

$$\beta = 90° - \tan^{-1}\left(\frac{z2 - z0}{x2 - x0}\right)$$

$$c = R31 \cdot \tan\left(\tan^{-1}\left(\frac{z2 - z0}{x2 - x0}\right) - \tan^{-1}\left(\frac{z1 - z0}{x1 - x0}\right)\right)$$

Fig. 11 shows a schematic illustration of steps S of a corresponding method can be defined in the control program 53. For example, in a first step S1, a design dataset D for a metal sheet part 10 to be milled may be obtained. In second step, respective design parameters P may be extracted from the design dataset D, for example, by means of transformation functions configured to adapt data from the design dataset D to the single metal sheet part 10 to be milled.

In a third step S3, measurement values M from the metal sheet part 10 to be milled may be obtained. In a fourth step S4, a real shape O of the metal sheet part 10 milled may be constructed from the measurement values M. In a fifth step S5, deviations F between the defined shape D and the real shape O may be determined. In a sixth step S6, the milling tool 21 may be controlled according to the determined deviations F.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

List of Reference Signs

| | |
|---|---|
| 1 | apparatus / vehicle / aircraft |
| 2 | support structure / fuselage |
| 3 | section |
| 3a-e | first to fifth section |
| 4 | ground |
| 5 | landing gear |
| 6 | interior space |
| 7 | mounting structure |
| 8 | load |
| 9 | interior structure |

| | |
|---|---|
| 10 | metal sheet part |
| 11 | upper side |
| 12 | lower side |
| 13 | lateral side |
| 14 | cover layer |

| | |
|---|---|
| 20 | milling device |
| 21 | milling tool |
| 22 | workbench |
| 23 | fixture assembly |
| 24 | tool support |
| 25 | measuring tool |
| 26 | support roller |
| 27 | roller base |
| 28 | shaft |
| 29 | tool holder |

| | |
|---|---|
| 30 | cutter |
| 31 | milling face |
| 32 | opposite milling face |
| 33 | lateral milling face |

| | |
|---|---|
| 41 | first cutter/upper cutter |
| 42 | second cutter/lower cutter |
| 43 | third cutter/lateral cutter |
| 44 | free space |

| | |
|---|---|
| 50 | control system |
| 51 | control application |
| 52 | control unit |
| 53 | control program |
| 54 | computer-readable data carrier |
| 54a | computer-readable medium |
| 54b | data carrier signal |
| 55 | computer workstation |
| 56 | server device |
| 57 | transmission line |

| | |
|---|---|
| a | measuring distance |
| c | curvature distance |
| r | lateral depth |
| t | milling depth |
| A | straight section |

B curved section
C curvature
D design shape / design dataset
E working plane
F deviation
G image dataset
H clear width
I starting point
K distance curved surface
M measurement value
N surface normal
O real shape
P design parameter
R rotational axis
S step
T initial material thickness
U processed material thickness
W waviness
X longitudinal direction
Y transverse direction
Z height direction

$\alpha$ lateral angle
$\beta$ longitudinal angle
y work angle
$\delta$ deviation angle
$\Delta t$ depth deviation

D31 milling diameter
D32 opposite milling diameter
D33 lateral milling diameter

R31 milling radius
R32 opposite milling radius
R33 lateral milling radius

S1 provide design

S2 extract/determine design parameters

S3 obtain measurement values

S4 construct real shape

S5 determined deviation

S6 control milling device

**Claims**

1. Method for milling a cover layer (14) of metal sheets (10), in particular for removing a cladding layer from cladded sheets, comprising the steps of

providing a milling tool (21) configured to rotate around a rotational axis (R), having at least one milling face (31, 32, 33) extending essentially perpendicularly to the rotational axis (R) and adapted to face the metal sheet (10) in order to mill the cover layer (14); and
providing a fixture assembly (23) configured for fixing the metal sheet (10) and defining a working plane (E) with which at least flat sections (A) of the metal sheet (10) are supposed to be aligned, such that a surface normal (N) of the flat section (A) extends essentially perpendicularly to the working plane (E);
wherein the rotational axis (R) is being tilted under at least one work angle (γ) with respect to the surface normal (N) of the flat section (A) during the milling process.

2. Method according to claim 1, wherein the at least one work angle (y) comprises a lateral angle (α) which is being adapted to compensate longitudinal irregularities of the metal sheet (10).

3. Method according to claim 1 or 2, wherein an opposite milling face (31, 32, 33) of the milling tool (21) is being provided and arranged opposite and essentially in parallel to the at least one milling face to provide a free space (44) between the at least one milling face (31, 32, 33) and the opposite milling face (31, 32, 33) for receiving the metal sheet (10).

4. Method according to claim 3, wherein a clear width (H) of the free space (44) measured essentially in parallel to the rotational axis (R) is selected to accommodate a minimal radius of a curved section (C) of the metal sheet (10) within the free space (44).

5. Method according to claim 4, wherein the at least one work angle (y) comprises a longitudinal angle (β) which is being adapted to the clear width (H).

6. Method according to at least one of claims 3 to 5, wherein the rotational axis (R) is being aligned to a surface normal (N) the curved section (B).

7. Method to according to at least one of claims 3 to 6, wherein the at least one milling face (31, 32, 33) and/or opposite milling face (31, 32, 33) describe a secant line with respect to an inner circumference of the curved section (B).

8. Method according to at least one of claims 3 to 7, wherein the at least one milling face (31, 32, 33) and/or opposite milling face (31, 32, 33) describe a tangent line with respect to an outer circumference of the curved section (B).

9. Method according to at least one of claims 2 to 8, wherein a diameter (D31, D32, D33) of the at least one milling face (31, 32, 33) is smaller than a diameter (D31, D32, D33) of the opposite milling face (31, 32, 33).

10. Method according to claim 8 or 9, wherein further comprising the step of providing a lateral milling face (31, 32, 33) of the milling tool (21) for simultaneously milling a lateral surface (13) of the metal sheet (10).

11. Method according to at least one of claims 1 to 10, further comprising the steps of

obtaining a design shape (D) of a sheet part (10) to be milled;
measuring a real shape (O) of the sheet part (10) in advance of the milling process;
determining a deviation (F) of the real shape (O) from the design shape (D); and
controlling the milling tool (21) according to the deviation (F)during the milling process.

12. A control program (53) comprising instructions which, when the control program (53) is executed by a control unit (52) for a milling device (21), cause the control unit (52) to carry out a method according to at least one of claims 1 to 11.

13. A computer-readable data-carrier (54, 54a, 54b) having stored thereon the control program (53) of claim 12.

14. A control unit (52) for a milling device (21), configured to carry out a control program (53) according to claim 12 and/or comprising a computer-readable data-carrier (54, 54a, 54b) according to claim 13.

15. A milling device (21) for milling a cover layer (14) of metal sheets (10), in particular for removing a cladding layer from cladded sheets, comprising a milling tool (21) configured to carry out a method according to at least one of claims 1 to 11 and/or a control unit according to claim 14.

**Fig. 1**

**A-A**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

Europäisches
Patentamt

European
Patent Office

Office européen
des brevets

## EUROPEAN SEARCH REPORT

Application Number

EP 24 20 2942

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 954 044 A (RIDGWAY WILLIAM F) 4 May 1976 (1976-05-04) * figures * | 3,6-8 | INV. B23C3/13 B23C5/06 B23C5/10 |
| X | JP S59 142015 A (SUMITOMO METAL IND) 15 August 1984 (1984-08-15) | 1-3,7,8, 11-15 | |
| A | * the whole document * * figures * | 4-6,9,10 | |
| A | US 4 648 762 A (HALL STURE [SE] ET AL) 10 March 1987 (1987-03-10) * figures * | 1,3,10 | |
| A | US 5 283 982 A (HARPER JR JACK E [US] ET AL) 8 February 1994 (1994-02-08) * figures * | 1 | |
| A | DE 203 20 863 U1 (TRUMPF GRUESCH AG GRUESCH [CH]) 14 April 2005 (2005-04-14) * figures * | 1 | |
| A | CN 205 218 150 U (DEYANG GUOTAI METALLURGICAL EQUIPMENT MFG CO LTD) 11 May 2016 (2016-05-11) * figures * | 1 | TECHNICAL FIELDS SEARCHED (IPC) B23C |
| A | CN 105 382 315 B (DEYANG GUOTAI METALLURGICAL EQUIPMENT MFG CO LTD) 14 November 2017 (2017-11-14) * figures * | 1 | |
| A | US 2019/262933 A1 (CHARTIER DAVID [FR] ET AL) 29 August 2019 (2019-08-29) * figures * | 1 | |

-/--

The present search report has been drawn up for all claims

| Place of search | Date of completion of the search | Examiner |
|---|---|---|
| The Hague | 25 March 2025 | Rabolini, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 20 2942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 019109 A (NIPPON STEEL CORP) 6 February 2020 (2020-02-06) | 15 | |
| A | * paragraph [0008] - paragraph [0010]; figures * * the whole document * | 1-14 | |

-----

TECHNICAL FIELDS
SEARCHED    (IPC)

The present search report has been drawn up for all claims

| Place of search | Date of completion of the search | Examiner |
|---|---|---|
| The Hague | 25 March 2025 | Rabolini, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 2942

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | | Publication date | Patent family member(s) | | Publication date |
|---|---|---|---|---|---|
| US 3954044 | A | 04-05-1976 | DE | 2600786 A1 | 15-07-1976 |
| | | | US | 3954044 A | 04-05-1976 |
| JP S59142015 | A | 15-08-1984 | NONE | | |
| US 4648762 | A | 10-03-1987 | CA | 1237885 A | 14-06-1988 |
| | | | GB | 2145020 A | 20-03-1985 |
| | | | NO | 158661 B | 11-07-1988 |
| | | | SE | 450695 B | 20-07-1987 |
| | | | US | 4648762 A | 10-03-1987 |
| US 5283982 | A | 08-02-1994 | NONE | | |
| DE 20320863 | U1 | 14-04-2005 | NONE | | |
| CN 205218150 | U | 11-05-2016 | NONE | | |
| CN 105382315 | B | 14-11-2017 | NONE | | |
| US 2019262933 | A1 | 29-08-2019 | EP | 3530404 A1 | 28-08-2019 |
| | | | FR | 3078280 A1 | 30-08-2019 |
| | | | US | 2019262933 A1 | 29-08-2019 |
| JP 2020019109 | A | 06-02-2020 | NONE | | |

EPO FORM P0459

For more details about this annex : see Official Journal of the European Patent Office, No. 12/82

**EP 4 717 384 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11219969 B2
- EP 1912759 B1
- EP 1439121 B1